# EUROPEAN PATENT APPLICATION

(11) **EP 3 282 567 A2**
(43) Date of publication of application: **14.02.2018**
(21) Application number: 17184991.2
(22) Date of filing: 04.08.2017
(51) Int. Cl.: H02K 23/00, H01R 39/32

(54) **ELECTRIC MOTOR**

(30) Priority: 12.08.2016 JP 2016158846
(71) Applicant: Yamamoto Electric Corporation, Sukagawa-shi Fukushima 962-0818 (JP)
(72) Inventor: Endo, Kazuya, Sukagawa-shi, Fukushima (JP)
(74) Representative: Intellectual Property Services GmbH

(57) **Abstract**

The electric motor includes a rotor 10 fixed to a rotation axis 4 and spread coaxially in a direction perpendicular to a direction of the rotation axis 4 to be allowed to rotate with the rotation axis 4, a commutator 30 coaxially fixed to the rotation axis 4 to come into sliding contact with a brush by rotating with the rotation axis, and a stator 20 arranged in a periphery of the rotor 10, wherein a felt 15 is mounted on an end of the commutator on a side of the rotor and holds at least partially a conductor wire that supplies a current from a segment to a corresponding winding of the rotor and also the felt 15 and a portion of the conductor wire near the end of the commutator are fixed by a material with which the felt 15 is impregnated and which solidifies when dried.

## Description

### BACKGROUND OF THE INVENTION

### TECHNICAL FIELD

The present invention relates to an electric motor, and in particular, relates to an electric motor that is suitable for vacuum cleaners and can also be used for various small products.

### BACKGROUND ART

In recent years, cleaners are required to have higher suction performance, be small in size, light, less destructible, and more cost-effective than in the past.

In conventional vacuum cleaners, the motor as a base element of suction thereof is demanded to have high power, high efficiency, and long life and improvements of suction performance are attempted by high input of the class of, for example, input 1600 W to 2 kW.

Today, however, concerns about worldwide environmental issues are expressed more frequently. In Europe, for example, measures what is called the Ecodesign directive (ErP directive) to reduce adverse effects of energy using products (ErP) on the environment have been taken by regulations such as the emission standard of carbon dioxide.

In the Ecodesign directive, the necessity of a new cleaner that maintains suction performance, which is the original mission of a vacuum cleaner, as high as possible and also uses a motor of low input of the class of, for example, input 500 W to 800 W arises.

Moreover, machines and apparatuses demanded to take environmental issues into consideration are not limited to vacuum cleaners and motors for various uses are required to improve energy efficiency and also to change from conventional high power consumption to low power consumption.

A motor includes a rotor fixed to a rotation axis to be able to rotate around its axis, a stator arranged like surrounding the rotor to play the role of a magnetic field, and a commutator axis-rotatably fixed to the rotation axis simultaneously with the rotor and disposed next to the rotor in an axial direction.

The rotor is made of a rotor core fixed to the rotation axis and is divided by a slot formed in a radial direction at equal intervals in a circumferential direction. Also, a plurality of coils is formed by a conductor wire being wound between slots to construct a rotor winding (armature winding).

The stator includes a field winding in which a conductive wire for magnetic field is wound around a stator core and a magnetic field is generated in the stator by passing a current to the conductor wire. For a DC power supply, a stator for magnetic field using a magnet can also be constructed.

In a commutator, a plurality of commutator segments as electric conductors is arranged at equal intervals in the circumferential direction around the commutator so as to be electrically in contact with a brush. In accordance with the rotation of the commutator, the brush slides on commutator segments of the rotating commutator to successively move to commutator segments in contact.

Each of the commutator segments is also called a segment and the number of commutator segments may be called the number of segments. Each commutator segment is electrically connected to one of a plurality of windings constituting a rotor.

Running torque with respect to the rotor is produced by a magnetic field generated in the stator and a current supplied from the commutator to the winding of the rotor. To which segment each of two terminals of which rotor winding (armature winding) is connected is determined by considering the phase of the rotor and switching of current from the commutator such that the rotor rotates in a constant direction.

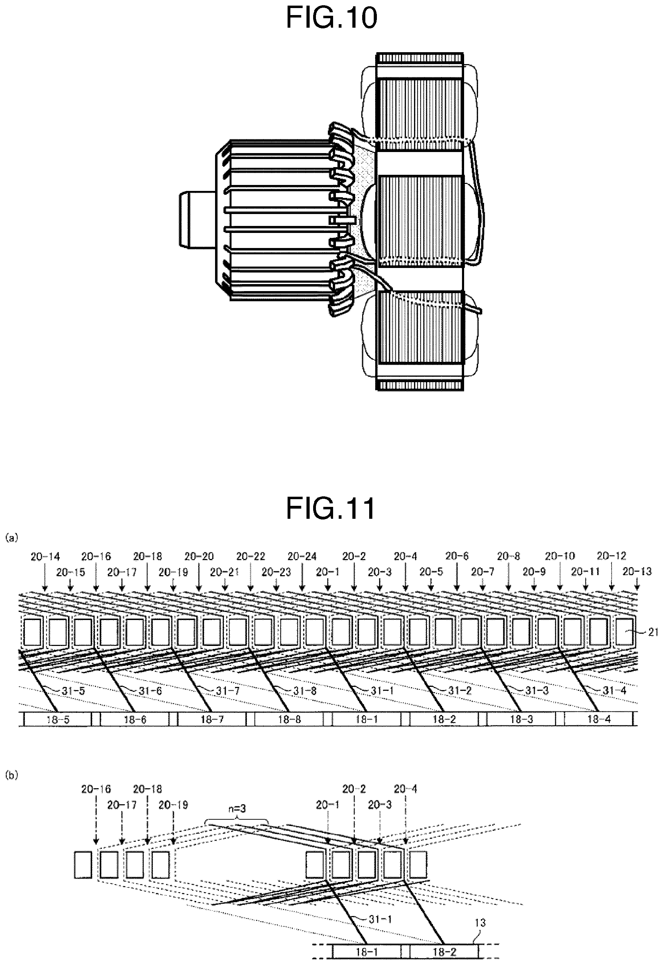

FIG. 10 shows an example of an armature including a conventional commutator and rotor.

Each commutator segment has a hook of a conductor. Normally, the conductor wire extending from a certain rotor winding (armature winding) of the rotor to the commutator is hooked on a hook of one commutator segment so as to be electrically conducting to electrically connect to another rotor winding (armature winding).

Because both ends of a conductor wire hooked on each hook are connected to different rotor windings, the conductor wire extending from each individual hook is connected to the corresponding rotor winding by obliquely intersecting conductor wires extending from other hooks.

FIG. 11 shows a connection relation between the commutator and rotor disclosed as JP 63-146456 Y. Reference numerals 18-1 to 18-8 show each segment and reference numerals 20-1 to 20-24 show each slot.

As is apparent from FIG. 11, the conductor wire extending from each slot intersects many other conductor wires between the commutator and rotor. In the past, rotor windings wound between slots and conductor wires between the commutator and rotor are fixed around the rotation axis using an adhesive, for example, an epoxy adhesive.

Here, compared with the class of input 1600 W to 2 kW, motors of the class of 500 W to 800 W have a smaller diameter of the commutator and a smaller diameter of the rotor core.

As an example, while the outside diameter of the commutator is 23.5 mm in an electric motor for high input of the class of input 1600 W to 2 kW, the outside diameter of the commutator decreases to 20 to 21.5 mm in an electric motor for low input of the class of 500 to 800 W. Thus, with a decrease of this magnitude, the diameter of conductor wires extending from the commutator to the rotor and that of conductor wires of the rotor winding need to be necessarily made thinner.

Also, to achieve more efficiency, with increasing numbers of segments and slots, increasingly thinner conductor wires are needed and at the same time, the degree of intersections thereof increases. Also, a plurality of different rotor windings may be wound around one slot so that thin conductor wires between the commutator and rotor intersect intricately to be routed around the rotation axis.

If the design of an electric motor for high input of the class of input 1600 W to 2 kW is changed to that of an electric motor for low input of the class of 500 to 800 W when, for example, a 22-segment commutator and a 22-slot rotor are used, the diameter of conductor wires and rotor windings greatly decreases from 0.37 to 0.4 mm to 0.2 to 0.35 mm so that mechanical strength of the conductor wire itself also decreases markedly.

In addition, to improve functionality and performance thereof, if an example of the vacuum cleaner is taken, performance evaluation based on an endurance and life test in which dust of a predetermined size is made to suck for a predetermined time in a predetermined frequency is increasingly demanded.

In the endurance and life test, an influence generated by dust intentionally being made to suck during operation on the electric motor can be evaluated, but it became clear after performing the test that breakage occurs particularly near the end of the commutator.

### SUMMARY OF THE INVENTION

Therefore, the present invention provides a new electric motor capable of preventing breakage of a conductor wire of a small diameter extending from the commutator to the rotor to be wound as a rotor winding (armature winding).

Particularly, the present invention provides a new electric motor capable of preventing breakage of a conductor wire used for an electric motor for vacuum cleaner of low input power, for example, an electric motor belonging to the class whose input is in the range of 500 to 800 W.

The present invention provides an electric motor including a rotor fixed to a rotation axis and spread coaxially in a direction perpendicular to a direction of the rotation axis to be allowed to rotate around its axis, a commutator coaxially fixed to the rotation axis to come into sliding contact with a brush by rotating around its axis, and a stator arranged in a periphery of the rotor, wherein a felt is mounted on an end portion of the commutator on a side of the rotor and the felt holds at least partially a conductor wire that supplies a current from each segment to a corresponding winding of the rotor and also the felt and a portion of the conductor wire near or at the end of the commutator are fixed by a material with which the felt is impregnated and which solidifies when dried.

Vibration of a conductor wire is interposed by using the felt as a vibration suppression member and an anchor effect is produced between the felt and a solidification material and between the solidification material and the conductor wire by the solidification material with which the felt is at least partially impregnated and which solidifies when dried and therefore, a vibration suppression effect thereof is further enhanced and a new effect of being able to prevent breakage of a conductor wire of a small diameter required for electric motors of low input power can be achieved.

Further, the present invention provides the electric motor in which a hole into which the rotation axis can be inserted is formed in a center portion of the felt and surroundings of the felt extend up to a vicinity of the commutator segment or to the commutator segment.

Further, for example, varnish can be used as the material.

According to various experiments by the inventors, it is assumed that vibration is emphasized between vibration of the commutator and the conductor wire fixed by an adhesive when a conventional adhesive is used, leading to breakage, but by using impregnation and a solidification material represented by varnish, the conductor wire can firmly be held by the solidification material with which the felt is impregnated and which solidifies while flexibility of the felt is maintained and therefore, breakage by vibration is considered to be inhibited by the felt and the conductor wire together.

Further, the present invention provides the electric motor further including an insulating member in which a rotor side insulating portion providing electric insulation from the rotor and a tubular portion into which the rotation axis is inserted to provide insulation from surroundings are integrally formed, wherein the tubular portion extends up to a recess provided on the end of the commutator 30.

The tubular portion extends up to the recess of the commutator and the tubular portion is formed integrally with the rotor side insulating portion and therefore, not only improvements of component strength and downsizing can be achieved, but also the felt can be arranged around the tubular portion to allow the felt to achieve a stable vibration absorption effect.

For example, the difference between vibration on the rotor side and vibration on the commutator side is mitigated and breakage of the conductor wire can further be prevented by the mitigated vibration being controlled by the felt.

By the tubular portion preferably being partially fitted into the recess of the commutator, a similar vibration is generated as a whole and the generation of local vibration is considered to be further controlled.

Further, according to the present invention, the number of segments of the commutator is 20 or more, the number of slots of the rotor is 20 or more, and a diameter of the conductor wire is 0.35 mm or less. This is particularly effective for an electric motor in which the thickness of a conductor wire is extremely limited by an increased number of segments and the conductor wire is in danger of breakage.

### BRIEF DESCRIPTION OF THE DRAWING

FIG. 1 is a structure diagram of a motor driven fan 100 according to the present embodiment;
FIG. 2 is a side view of a motor driven rotator 1 of the motor driven fan 100 according to the present embodiment;
FIG. 3 is a partial enlarged view of the motor driven rotator 1 in FIG. 2;
FIG. 4A is a side sectional view of a commutator 30 before being mounted on a rotation axis of the motor driven rotator 1 in FIG. 2 and a felt 15 mounted on the commutator 30;
FIG. 4B is a front view when the commutator 30 in FIG. 4A and the felt15 mounted on the commutator 30 are viewed from a rotation axis direction;
FIG. 5A is a front view of the felt 15 when viewed from an axial direction;
FIG. 5B is a side view of the felt 15;
FIG. 6A is a front view of a shaft insulator 9 used for the motor driven rotator 1 in FIG. 2 when viewed from the axial direction;
FIG. 6B is a side sectional view of the shaft insulator 9 used for the motor driven rotator 1 in FIG. 2;
FIG. 7A is a front view of a rotor core 11 when viewed from the rotation axis (center axis) direction;
FIG. 7B is a side view of the rotor core 11 when viewed from a vertical direction of the rotation axis;
FIG. 8A is a front view of a stator core 21 from the axial direction;
FIG. 8B is a side view of the stator core 21;
FIG. 9 is an illustration of an example when a conductor wire is mounted between the commutator 30 and the rotor using the felt 15;
FIG. 10 is a side view showing a conventional connected state of conductor wires between a commutator and a rotor; and
FIG. 11 is a diagram showing a connection relation of conductor wires to segment terminals and rotor windings of a core shown in prior art patent publication JP 63-146456 Y.

### DETAILED DESCRIPTION OF THE EMBODIMENTS

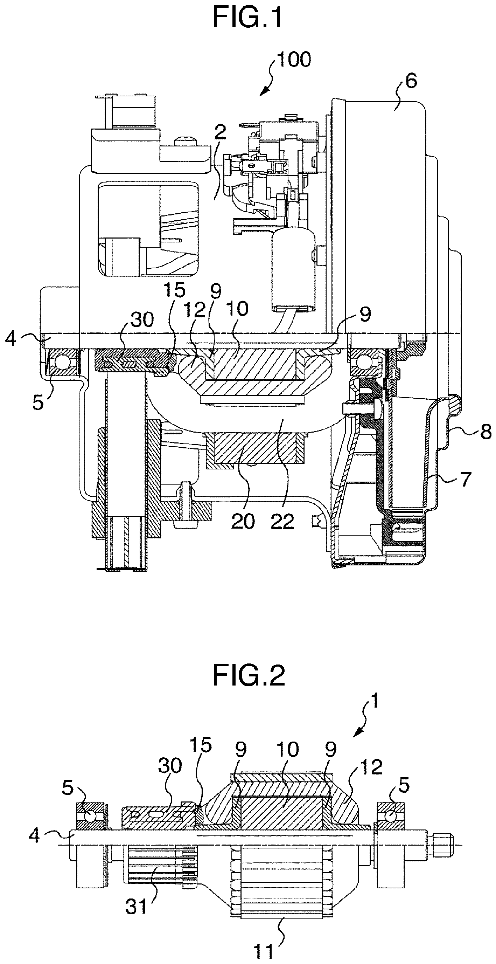

FIG. 1 is a schematic diagram of a motor driven fan 100 according to a first embodiment of the present invention.

In the motor driven fan 100, a fan casing unit 6 on one side and an electric motor casing 2 on the other side are integrated. Inside the electric motor casing 2, a rotation axis (shaft) 4 axis-rotatably supported pivotally by a bearing 5, a commutator 30 and a rotor 10 fixed to the rotation axis 4 to rotate in accordance with the rotation of the rotation axis 4, and a stator 20 fixed inside the electric motor casing 2 like surrounding the rotor 10 are provided. Inside the fan casing unit 6, an impeller 7 fixed to the rotation axis 4 to rotate is provided and an impeller casing 8 partially surrounding the impeller 7 is provided and an impeller 7 and an impeller casing 8 constitute the fan casing unit 6.

FIG. 2 shows a motor driven rotator 1 to exercise a rotation drive force of an electric motor. The commutator 30 includes a plurality of conductors, for example, a plurality of commutator segments 31 made of copper (OFC). The plurality of commutator segments 31 is mounted on, for example, a commutator body made of resin in parallel with the axial direction of the rotation axis 4 thereof like spreading radially to the outer side in the radial direction. At least an outer surface of the commutator segment 31 is electrically exposed and a brush (not illustrated) is configured to be in sliding contact with the exposed surface. The brush is electrically connected to a field winding of the stator 20 described below.

A current flows to a rotor winding 12 of the rotor 10 due to sliding contact between the brush and the commutator segment 31 of the commutator 30 in an electric operation, running torque is generated by an interaction of magnetic fluxes generated in the rotor 10 and the stator 20 by rectification of the commutator 30, the rotor 10 rotates with the rotation axis 4 in the stator 20, and the turning force thereof rotates the impeller 7 via the rotation axis 4. Incidentally, the basic configuration of the commutator segment 31 and the brush is known to people skilled in the art and so detailed description thereof is omitted here.

The rotor 10 provided on the rotation axis 4 next to the commutator 30 has, as will be described in detail below, a plurality of slots formed thereon and conductor wires to be a plurality of the rotor windings 12 are wound around the plurality of slots. The plurality of rotor windings 12 and connection terminals of the commutator 30 are electrically coupled in an electromagnetic correspondence so that the electric motor is driven to rotate.

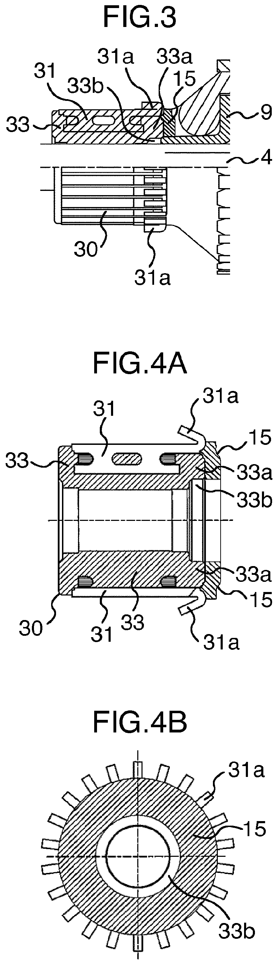

FIG. 3 is a diagram that partially enlarges a portion between the commutator 30 and the rotor 10 arranged next to the commutator 30 of the motor driven rotator 1 in FIG. 2. In this example, for an electric motor of low input, the commutator 30 having 22 segments and the rotor 10 having 22 slots are provided and the diameter of the rotor winding 12 and the conductor wire supplied from the commutator 30 to the rotor winding 12 is set to 0.35 mm or less, for example, between 0.2 to 0.35 mm.

A protruding portion 33a protruding toward the side of the rotor 10 concentrically around the rotation axis (shaft) 4 is provided on an end of a commutator body 33 of the commutator 30 on the side of the rotor 10. Then, the felt 15 is mounted on an end face of the protruding portion 33a.

FIG. 4A shows a sectional view of the commutator 30 on which the felt 15 is mounted and FIG. 4B shows a front view of the commutator 30 when viewed from the axial direction.

The commutator 30 has an axial hole having a diameter so that the rotation axis (shaft) 4 passes therethrough and is fixed therein. In this example, the diameter of the axial hole is ϕ8.0 mm and the protruding portion 33a is formed by a recess portion 33b radially extending from the axial hole to have a diameter larger than that of the axial hole. Then, the protruding portion 33a has a surface facing the axial direction and spreading concentrically in the radial direction.

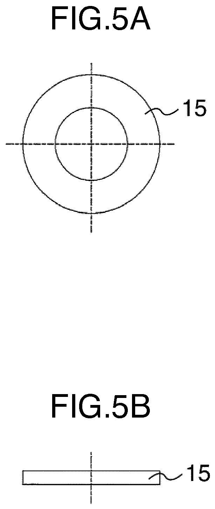

FIG. 5A shows a front view when the felt 15 is viewed from the axial direction and FIG. 5B shows the side view of the felt 15.

The felt 15 has a size enough to cover the spread surface of the protruding portion 33a and preferably has a hole of approximately the same diameter as that of the recess portion 33b in the center formed by the protruding portion 33a. In this example, the diameter of the recess portion 33b of the protruding portion 33a (that is, the inside diameter of the protruding portion) is ϕ10.8 mm and the inside diameter of the felt 15 is matched to this diameter and has ϕ10.8 mm. The surface of the protruding portion 33a (the surface facing the axial direction) preferably has a substantially flat portion and the height in the axial direction is somewhat smaller in the periphery thereof.

The shape of the surface of the felt 15 is specified such that the felt 15 can be pasted along the surface of the protruding portion 33a. The felt 15 is elastically deformable and pasted to the surface of the protruding portion 33a using, for example, a double-faced tape or an adhesive so as to be along the surface of the substantially flat portion and a lower portion in the periphery of the commutator 30. The surface of one side of the double-faced tape may be pasted to the entire surface of one side of the felt 15 in advance.

The felt 15 has a size to the extent that the protruding portion 33a of the commutator 30 is covered as a whole and preferably has a size to the extent that at least the periphery of the felt 15 reaches a hook 31a beyond an edge of the protruding portion 33a.

The felt 15 can be pasted by being deformed in accordance with irregular changes of the surface of the protruding portion 33a and also, as will be described below, needs to support a conductor wire extending to the hook 31a of the commutator 30 from the rotor winding 12 and have flexibility and elasticity to the extent that vibration of the conductor wire can be absorbed. Therefore, the shape of the surface of the protruding portion 33a also preferably needs to have a size to the extent that such elasticity capable of absorbing vibration of the conductor wire is not hindered.

The felt 15 is created by appropriately selecting a material having such flexibility and elasticity and in the present example, a felt made of a fiber blend of wool 80% and rayon 20% is used.

It is preferable to fix a conductor wire extending from the hook 31a of the commutator 30 to the felt using a fixative with which the felt 15 is impregnated in a liquid state and made of a material immobilized by drying. By using a fixative having such features, in addition to an effect of suppressing vibration by the felt itself as a vibration suppression member, an anchor effect between the felt and fixative and between the fixative and conductor wire also arises, further enhancing the vibration suppression effect.

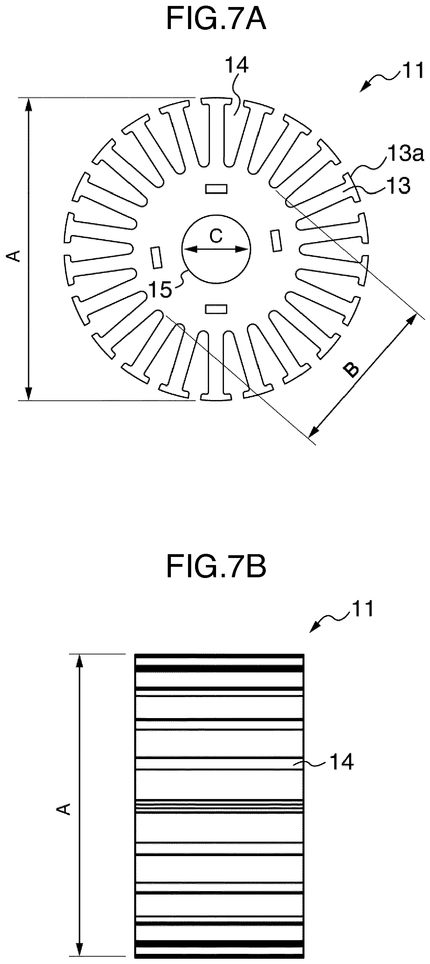

Referring to FIG. 3, shaft insulators 9 mounted on the rotation axis (shaft) 4 like sandwiching the rotor core 11 from both sides are provided on the both sides of the rotor core 11 (FIG. 7A) constituting the rotor 10.

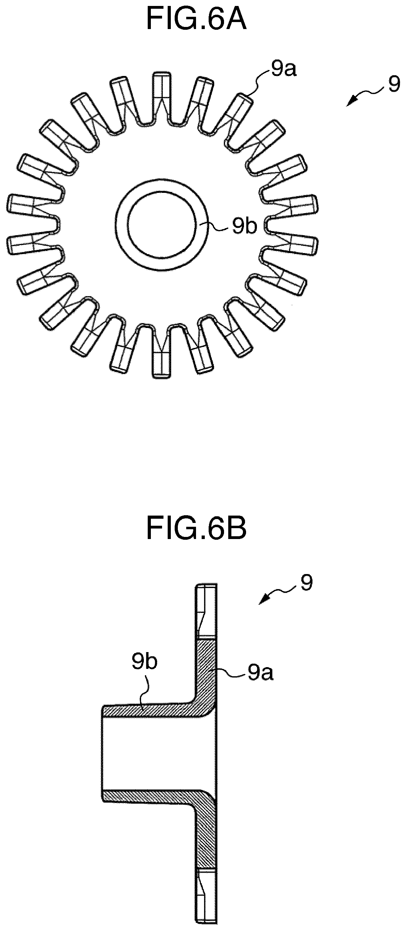

FIG. 6A is a front view when the shaft insulator 9 is viewed from the axial direction and FIG. 6B is a side sectional view.

The shaft insulator 9 can be made by molding an insulator material. For example, the insulator material can be PET, but not limited to PET and it may be any material that has electric insulation properties, does less harm to human beings during processing, and can integrally be produced.

The shaft insulator 9 has a tubular portion 9b having an axial hole of approximately the same diameter as that of the rotation axis 4 so that the rotation axis 4 can be inserted into and fixed to the axial hole and an expanding portion 9a expanding in the radial direction on one end of the tubular portion. If the rotation axis (shaft) 4 is made of a conductor, the tubular portion also has an electric insulation function from the rotation axis (shaft) 4. Also, the expanding portion 9a has an insulation function from the side face of the rotor core 11 described below.

The two shaft insulators 9 are symmetrically arranged on both side faces of the rotor core 11 like sandwiching the rotor core 11 from both sides and fixed around the rotation axis (shaft) 4.

In the shaft insulator 9 on the side of the commutator 30, an end of the tubular portion 9b thereof extends up to the recess portion 33b of the protruding portion 33a and the size of the recess portion 33b of the protruding portion 33a and the size of the outer shape of the tubular portion 9b are adjusted such that the end is at least partially received or at least partially fitted into the recess.

Returning to the example of FIG. 3, for example, while the diameter of the recess portion 33b is ϕ12.5 mm, the outside diameter of the tubular portion 9b has a diameter of approximately the same or less size so as to fit into the recess portion 33b. The tip of the tubular portion 9b may be formed in a tapering shape to at least partially fit into the recess portion 33b.

The felt 15 is arranged around the tubular portion 9b. Also, the inside diameter of the felt 15 is matched to the diameter of the recess portion 33b of the protruding portion 33a, which is ϕ10.8 mm, and configured so that the tubular portion 9b can be inserted by fitting into the hole of the felt 15.

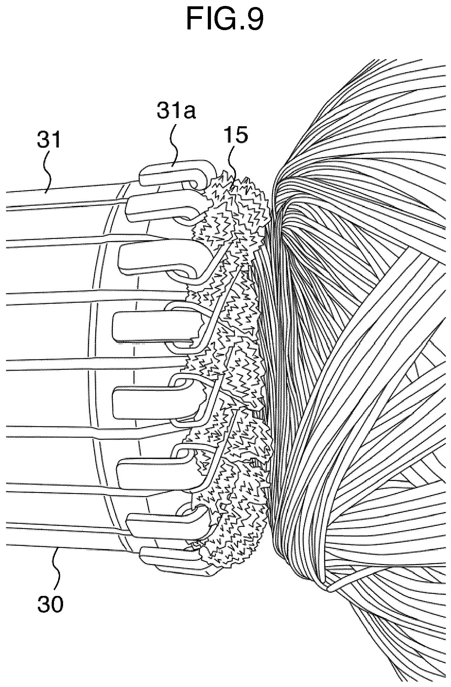

FIG. 9 is a shape converted into a drawing of a state in which the felt 15 is actually used and a plurality of conductor wires leading to rotor windings is hooked on a plurality of the hooks 31a and wound around the axis by intersecting over the felt 15.

One conductor wire is hooked on the hook 31a of one segment and intersected over the felt 15 to continue to a winding of different slots (not shown) of the rotor positioned in the right direction. The conductor wire is wound around the rotation axis (shaft) 4 by being throttled while intersecting other conductor wires over the felt 15 and so the felt 15 holds the conductor wire by being elastically deformed. At this point, the pressing force on the felt 15 from the conductor wire is applied in the direction of the rotation axis (shaft) 4 and the direction of the protruding portion 33a on the side face of the commutator 30 and the tubular portion 9b at least partially intrudes the recess portion 33b of the protruding portion 33a which is the side end of the commutator 30 and so the felt 15 is steadfastly supported by the protruding portion 33a and the tubular portion 9b and the conductor wire is reliably held by the felt 15.

Also, regarding vibration generated by rotation of an armature, the protruding portion 33a and the tubular portion 9b simultaneously vibrate to make different vibrations less likely to arise in the conductor wire so that the possibility of breakage is reduced. Moreover, the shaft insulator 9 is arranged integrally between the rotor core 11 and the commutator 30, the expanding portion 9a functions as a rotor side insulation portion, and the tubular portion 9b functions also as a rotation axis insulation portion and thus, the shaft insulator 9 assists the felt 15 to exert the vibration suppression effect and also exerts the insulation effect. Therefore, improvements of component strength and downsizing of a motor driven rotator demanded from electric motors of small power can be achieved and also a stable vibration absorption effect by the felt can be exerted.

FIG. 7A is a front view when the rotor core 11 constituting the rotor 10 is viewed from the direction of the rotation axis 4. In the rotor core 11, a plurality of slots 14 and a plurality of teeth 13 are alternately formed.

In the present example, by using the rotor core 11 of 22 slots and the commutator 30 including commutator segments that can constitute at least 20 segments (22 segments in the present example), an induced voltage (reactance voltage) generated during rectification by rotational movement of segments due to axis rotation, that is, when the brush separates from a coil and moves to the next coil, is reduced, thereby inhibiting sparking from occurring. Accordingly, abrasion of the brush that can be used for the commutator 30 smaller than in the past is also reduced so that the life of the electric motor itself can be prolonged.

Further, as will be described below, a thin flat rolled magnetic steel sheet and strip having predetermined electromagnetic characteristics and used also for the motor driven fan 100 for high input and high power to obtain high-speed rotation of 30,000 rpm(r/m) or more per minute developed in parallel with the present invention is made available.

With the rotor core 11 itself having a relatively large number of slots, at least 10 slots or more and 22 slots in this example and the length of the slot being made relatively long when compared with the diameter of the rotor core as a whole, winding is made still easier and in a downsized electric motor, there is no need to use a winding of extremely thin diameter.

To describe the rotor core 11 more concretely with reference to FIG. 7A, the bottom of the slot 14 is formed in a predetermined position in the radial direction from the axis center of the core at equal intervals in the circumferential direction. Accordingly, a plurality of the teeth 13 in the same substantial T shape in the radial direction when viewed from the axial direction and the slots 14 in the U shape between neighboring teeth are formed at equal intervals radially along the circumferential direction.

As dimensions of the rotor core 11, the diameter A of the maximum outer circumference is set to about 35 mm, the minimum distance B between slots opposite to each other among slots forming the plurality of teeth 13 is set to about 19.1 mm, and the diameter of the axial hole of the rotor core 11 is set to about 8 mm. The height of the teeth 13 specified by (A - B)/2 is about 7.95 mm and the height of the teeth 13 is set to at least 40% of the radius 17.5 mm of the rotor core.

On the other hand, as dimensions of the rotor core 11 used by the motor driven rotator 1 conforming to high input and high power, A is about 38 mm, B is about 24.8 mm, C is about 8 mm, and the width of a principal portion of the teeth 13 is about 2.2 mm. In the rotor core 11, the height of the teeth 13 specified by (A - B)/2 is about 6.6 mm, which means that the height of the teeth 13 is at least 1/3 or more of the radius 19 mm of the rotor core, but in the embodiment of the present invention, the height of the teeth 13 has a larger ratio to the radius of the rotor core.

An electric wire is wound around the plurality of teeth 13 by passing through the plurality of slots 14 extending in the axial direction like a coil and fixed using varnish to form the rotor core 11.

The rotor core 11 of the electric motor can be produced by stacking a plurality of thin plate-like flat rolled magnetic steel sheets and strips in a layer structure. As described above, even in an environment in which a smaller winding diameter is required, a winding of extremely thin diameter is made unnecessary by allowing a relatively large number of slots for the rotor core 11 and the ratio of the length thereof to the rotor core diameter measured at the tip of teeth is made equal to a predetermined ratio or more so that a relatively wide region with respect to the region of the total diameter of the rotor core 11 is occupied by slots. However, the winding diameter is small when compared with the past and thus, as described above, it is necessary to reduce vibration affecting windings due to rotation of the motor driven rotator 1.

In the motor driven rotator 1 according to the present invention, the height of the teeth 13 has a large ratio and erosion by slots is significant and thus, it is necessary to efficiently obtain a large alternating field from a substantially decreased region of the rotor core. Therefore, it is necessary to achieve a high magnetic flux density quickly conforming to the alternating field and also to obtain enough motor characteristics by decreasing iron losses in accordance with frequency characteristics for the slots.

As is known to people skilled in the art, iron losses include eddy current losses, hysteresis losses, and residual losses and typically eddy current losses and hysteresis losses.

To reduce iron losses and achieve a high magnetic flux density corresponding to the alternating field, flat rolled magnetic steel sheets and strips of the thickness of 0.3 mm or less, in the present example, having an extremely thin thickness of 0.25 mm, in which the thickness and the material of the strip are the same thickness and material as those of the rotor core element used for the motor driven rotator 1 for high input and high power, are formed in a flat shape in FIG. 7A and stacked in many layers to produce an assembly of the rotor core 11.

To reduce an eddy current generated on the surface, the thin flat rolled magnetic steel sheet and strip is provided with an insulating coating, for example, a chrome-free organic coating on the surface to suppress the generation of an eddy current by creating a thick multi-layer rotor core.

Further, to exert functions as an electric motor by generating electromagnetic characteristics in accordance with an alternating field and hysteresis losses, iron losses of the thin flat rolled magnetic steel sheet and strip are set to 2.30 w/kg or less for W15/50 and 14.0 w/kg or less for W10/400 and magnetic flux density B50(T) is set to 1.62 or more.

Measurements are based on JISC-2550 (2000) and here, W15/50 is an iron loss when the frequency is 50 Hz and the maximum magnetic flux density is 1.5 Tesla, W10/400 is an iron loss when the frequency is 400 Hz and the maximum magnetic flux density is 1.0 Tesla, and B50(T) shows the magnetic flux density at a magnetizing force of 5,000 A/m.

The flat rolled magnetic steel sheet and strip specified in the present example is an extremely thin plate of 0.25 mm and thus, the rotor core easily can be formed into a smaller shape specific to the present example. Also, the weight of the rotor core itself is reduced and thus, damage done to mechanical portions due to vibration generated in accordance with rotation of the motor can be reduced.

If the thickness of a rotor core is increased, the amount of the flat rolled magnetic steel sheet and strip increases and efficiency is correspondingly improved, but external dimensions and the weight increase. In addition, the size thereof needs to be small enough to be usable in a vacuum cleaner. By making each element of the rotor core still thinner, increasing the number thereof, and stacking each element to make the entire thickness 21 mm, an electric motor that can be used for a vacuum cleaner and can achieve performance requirements demanded from a vacuum cleaner could be provided.

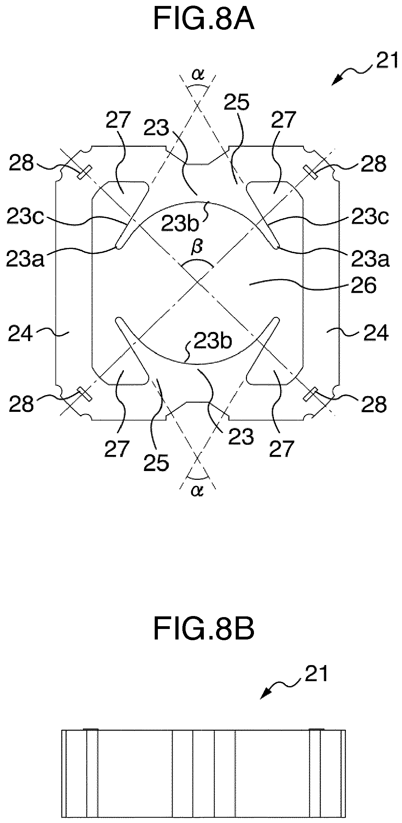

FIG. 8A shows a stator core 21 when viewed from the axial direction of the electric motor and FIG. 8B is a side view of the stator core 21. The stator core 21 has two polar portions 23 facing each other and each is connected to a yoke 24 as a path of magnetic fluxes in the opposite position. The rotor core 11 is axis-rotatably arranged inside a space 26 formed between the polar portions 23 facing each other.

Each of the polar portions 23 has a polar surface 23b in an arcuate shape corresponding to the tip surface of the teeth 13 of the rotor core 11 and a neck portion 25 connected so as to magnetically connect the yoke 24 and the polar surface 23b. Another space 27 is formed between the neck portion 25 and the yoke 24 on both sides of the polar portion 23 such that a field winding 22 (see FIG. 1) can sufficiently be wound around the neck portion 25 by passing through the space 27. The brush of the commutator 30 is electrically connected to the field winding of the stator 20.

The yoke 24 has a substantially quadrangular strip shape so that an conductive wire can be wound many around the polar portion 23 up to the neck portion 25 and sides 23c have substantial straight lines such that an angle α formed by intersecting lines extending from the sides 23c specifying the space 27 on both sides of the polar portion 23 becomes a predetermined angle, for example, about 62 degrees. The length of the polar surface 23b of the polar portion 23 is set to a length to allow the eight teeth 13 of the rotor core 11 axis-rotatably mounted in the space 26 to be accommodated within the polar surface 23b so that a sufficient magnetic flux density is generated from the polar portion 23 to the yoke.

The center portion of the polar portion 23 connected to the yoke 24 increases in the magnetic flux density when compared with a polar portion tip 23a of the polar portion 23. Thus, to make the magnetic flux density of the polar portion 23 constant, the width of the polar portion 23 is made to increase from the tip portion 23a of the polar portion 23 toward the center portion, thereby preventing a magnetic field line from becoming nonuniform.

The maximum number of times of winding of a field winding that can be permitted increases with an increasing size of the space 27 and if the neck portion is small, the total length of the field winding used to wind as many times becomes shorter, which is effective in cost, makes the resistance due to field winding smaller, and reduces the weight.

The angle α at which the lines extending from the sides 23c intersect is determined in consideration of making the space 27 large, the number of the teeth 13 in a magnetic interaction between the polar surface 23b of the polar portion 23 and the tip surface of the teeth 13 of the rotor core 11, and a tapering width of the polar portion 23 from the center portion of the polar portion 23 to the polar portion tip 23a to maintain the magnetic flux density constant as much as possible as the center of the polar portion 23 is approached and is preferably in the range of 60 to 64 degrees.

The length of the stator core 21 in the axial direction is preferably substantially the same length of the rotor core 11 so as to have a magnetic interaction with the rotor core 11 in its entire length. Therefore, in the present example, the length of the stator core 21 is set to 21 mm to match 21 mm as the length of the rotor core 11 in the axial direction.

The manufacturing and management can be made efficient by using the same material for the stator core as that of the rotor core and making basic iron loss characteristics the same as those of the rotor core.

Like the rotor core, the stator core can be formed by stacking a plurality of layers of a stator core element made of a thin plate-like flat rolled magnetic steel sheet and strip and having the same shape and the same thickness and integrally combining such stator core elements.

Each thin-plate stator core element constituting the stator core 21 and each thin-plate rotor core element constituting the rotor core 11 are each punched simultaneously in one press process using one mold so that the electromagnetic relationship of each thin flat rolled magnetic steel sheet and strip is correspondingly maintained.

Therefore, the stator core element has the same basic electromagnetic characteristics as those of the rotor core element, that is, based on the same measurements of JISC-2550 (2000), the stator core element is made of the thin flat rolled magnetic steel sheet and strip whose iron losses are set to 2.30 w/kg or less for W15/50 and 14.0 w/kg or less for W10/400 and whose magnetic flux density B50(T) is set to 1.62 or more.

In the rotor core and stator core, a plurality of layers of the rotor core element or stator core element is fixed by caulking. However, the rotor core element and stator core element are an extremely thin flat rolled magnetic steel sheet and strip and thus, if fixed firmly by caulking, the insulating coating may be damaged and, as a result, an eddy current increases and a problem of increased flow losses may be caused.

Particularly, in a rotor core needing high-speed rotation, a large eddy current is generated and the influence thereof is marked. Thus, instead of fixing a plurality of layers of the rotor core element by caulking, the plurality of layers of the rotor core element may be fixed by an adhesive. In consideration of the eddy current, an insulating adhesive is preferably used for the adhesive, but if the influence of the eddy current generated by the adhesive itself is negligible, the adhesive may not necessarily be an insulating adhesive. On the other hand, the stator core 21 is a portion of the stator and, when compared with the rotor core, is not driven to rotate and subjected to a force due to large acceleration and thus, all stator core elements may be combined and fixed by caulking. In the present example, a recess 28 for caulking is provided at the four corners of the yoke in each rotor core element to allow fixing by caulking.

Incidentally, the rotor core and the stator core are constructed by stacking 84 rotor core elements and 84 stator core elements respectively.

An adhesive can be formed as a very thin layer and even if 84 elements are stacked and fixed using the adhesive, the influence on the total thickness of 21 mm does not practically arise.

## Claims

1. An electric motor comprising a rotor (10) fixed to a rotation axis (4) and spread coaxially in a direction perpendicular to a direction of the rotation axis (4) to be allowed to rotate with the rotation axis (4) around its axis, a commutator (30) coaxially fixed to the rotation axis (4) to allow a brush to slidingly contact with a segment of the rotating commutator (30), and a stator (20 arranged in a periphery of the rotor (10), being **characterized by** that,
a felt (15) is mounted on an end of the commutator (30) on a side of the rotor (10) and the felt (15) holds at least partially a conductor wire that supplies a current from a segment of the commutator (30) to a corresponding winding of the rotor (10) and also the felt (15) and at least a portion of the conductor wire near the end of the commutator (30) are fixed by a solidification material with which the felt (15) is impregnated and which solidifies when dried.

2. The electric motor according to claim 1, wherein a hole into which the rotation axis (4) can be inserted is formed in a center portion of the felt and surroundings thereof extend up to a neighborhood of a commutator segment (31) of the commutator (30) or the commutator segment (31).

3. The electric motor according to claim 1 or 2, wherein the solidification material is made of varnish.

4. The electric motor according to any one of claims 1 to 3, further comprising: an insulating member in which a rotor side insulating portion providing electric insulation from the rotor (10) and a tubular portion into which the rotation axis (4) is inserted to provide insulation from surroundings are integrally formed, wherein the tubular portion extends up to a recess portion (33b) provided on the end of the commutator (30).

5. The electric motor according to any one of claims 1 to 4, wherein a number of segments of the commutator (30) is 20 or more, a number of slots of the rotor (10) is 20 or more, and a diameter of the conductor wire is 0.35 mm or less.
